# EUROPÄISCHE PATENTSCHRIFT

(11) **EP 2 302 272 B1**
(45) Veröffentlichungstag und Bekanntmachung des Hinweises auf die Patenterteilung: **21.05.2014**
(21) Anmeldenummer: 10179995.5
(22) Anmeldetag: 27.09.2010
(51) Int. Cl.: F16K 31/60, F16K 11/078

(54) **Ventilkartusche**
Valve cartridge
Cartouche de soupape

(30) Priorität: 28.09.2009 DE 102009048487
(43) Veröffentlichungstag der Anmeldung: 30.03.2011
(73) Patentinhaber: Hansgrohe SE, 77761 Schiltach (DE)
(72) Erfinder: King, Jürgen, 78730 Lauterbach (DE); Hahn, Arno, 77761 Schiltach (DE); Braunwarth, Anja, 77761 Schiltach (DE)
(74) Vertreter: Patentanwälte Ruff, Wilhelm, Beier, Dauster & Partner

(56) Entgegenhaltungen:
- EP-A1- 1 677 037
- EP-A2- 1 130 177
- DE-A1- 3 822 217
- DE-A1-102005 030 515
- US-B1- 7 357 154

## Beschreibung

Die Erfindung betrifft eine Ventilkartusche für eine Sanitärarmatur.

Ventilkartuschen enthalten eine vollständige Ventilsteuerung in einem abgeschlossenen Ventilgehäuse. Aus dem Ventilgehäuse ragt ein Betätigungsschaft heraus, an dem ein Griff angebracht werden kann. Durch Verdrehen und Schwenken des Betätigungsschafts werden die Einstellmöglichkeiten des Ventils betätigt.

Es ist bekannt, an Sanitärarmaturen Rastungen vorzusehen, die dem Benutzer anzeigen sollen, dass er das Ventil zu einer bestimmten Öffnungsstellung geöffnet hat, jenseits der der Wasserverbrauch möglicherweise zu hoch ist. Es soll auf diese Weise vor einem zu hohen Wasserverbrauch gewarnt werden. Diese Raststellungen sollen aber durch Weiterbewegen des Griffs überwunden werden können.

Bei einem bekannten Einhebelmischventil (EP 662577) sind Anschlagmittel vorhanden, durch die eine Begrenzung mithilfe eines einen überwindbaren Widerstand erzeugenden Anschlagmittels erfolgt. Die Anschlagmittel werden von federnden Kunststoffzungen gebildet. Diese können im Laufe der Zeit ihre Charakteristik ändern.

Weiterhin bekannt ist ein sanitäres Einhebelmischventil (DE 3822217), bei dem auf einer Seite des Führungsteils für die bewegbare Steuerscheibe in der Lagerhülse eine Ausnehmung mit einem darin angeordneten Federelement vorgesehen ist. Dieses Federelement greift in eine Vertiefung in der Seite des Führungsteils ein.

Ebenfalls bekannt ist ein Einhebelmischventil (DE 4340713), bei dem seitlich in einem Drehring außerhalb des Gehäuseoberteils eine von einer Schraubenfeder beaufschlagte Kugel angeordnet ist, die in eine Vertiefung des Griffs eingreifen kann.

Weiterhin ist eine Wasserauslaufventilanordnung bekannt, bei der in einer Durchgangsöffnung eines Stellhebels der Ventilkartusche eine Schraube eingeschraubt ist, die in einem hohlen Schaft eine federbeaufschlagte Kugel als bewegbares Rastelement enthält (EP 1130177 A2).

Der Erfindung liegt die Aufgabe zu Grunde, eine Ventilkartusche zu schaffen, die bei kleiner Baugröße eine auch bei langem Gebrauch konstant bleibende und gut steuerbare Rastcharakteristik beibehält.

Zur Lösung dieser Aufgabe schlägt die Erfindung eine Ventilkartusche mit den im Anspruch 1 genannten Merkmalen vor. Weiterbildungen der Erfindung sind Gegenstand von Unteransprüchen.

Aufgrund der Tatsache, dass das nachgiebige und vorgespannte Rastmittel, also das bewegliche Rastmittel, als getrenntes Bauteil ausgebildet ist, kann es für seine eigenen Zwecke konstruiert werden. Es kann auf die Umstände des Einzelfalls angepasst werden. Es kann auch bei Demontage der Kartusche nachträglich ausgetauscht werden.

Die Anordnung des bewegbaren Rastmittels in der Ventilkartusche selbst, also nicht im Griff, hat den Vorteil, dass auch bei Griffen mit einem unterschiedlichen Design oder auch unterschiedlichen Abmessungen die Funktion der Rastung vollständig erhalten bleibt.

Das bewegbare Rastmittel muss mit einem anderen Rastmittel zur Herstellung der Rastung zusammen wirken. Dies kann im Prinzip auch ein bewegbares Rastmittel seien. Erfindungsgemäß kann in Weiterbildung vorgesehen sein, dass das bewegbare Rastmittel mit einem feststehenden Rastmittel zusammenwirkt.

Während im Stand der Technik üblicherweise das nachgiebige Rastmittel aus Kunststoff besteht, da die Griffe und die Kartuschengehäuse auch meistens aus Kunststoff bestehen, schlägt die Erfindung in Weiterbildung vor, dass das bewegbare Rastmittel ein metallisches Federelement aufweist, insbesondere eine Schraubenfeder. Schraubenfedern haben den Vorteil, dass sie eine gut reproduzierbare Federcharakteristik aufweisen und darüber hinaus auch eine lange Lebensdauer.

Gemäss der Erfindung ist vorgesehen, dass das bewegbare Rastmittel in dem Betätigungsschaft angeordnet ist und mit diesem bewegt wird. Bei dem Betätigungsschaft handelt es sich um ein belastbares Bauelement, das auch eine gewisse Ausdehnung hat, so dass hier ausreichend Platz für das bewegbare Rastmittel, insbesondere für die Schraubenfeder, zur Verfügung steht. Trotz der Verwendung einer an sich relativ großen Schraubenfeder vergrößert sich der Platzbedarf für das von der Erfindung für den Einsatz in einer Ventilkartusche vorgeschlagene Rastmittel nicht.

Erfindungsgemäss ist desweiteren vorgesehen, dass die Bewegungsrichtung des bewegbaren Rastmittels parallel zu der Schwenkachse des Betätigungsschafts verläuft.

Die Erfindung schlägt in Weiterbildung vor, dass das feststehende Rastmittel, also der Teil der Ventilkartusche, mit dem das bewegbare Rastmittel zur Bildung der Rastung zusammenwirkt, in der Lagerhülse angeordnet ist. Es braucht also kein zusätzliches Teil angebracht zu werden.

Erfindungsgemäß ist weiters vorgesehen dass das bewegbare Rastmittel in einem Sackloch des Betätigungsschafts angeordnet ist und sich auf dem Boden des Sacklochs abstützt. Dieses Sackloch bildet gleichzeitig eine Führung für die Bewegung des bewegbaren Rastmittels und kann, falls das bewegbare Rastmittel mit einer Schraubenfeder zusammenwirkt, auch Platz für die Unterbringung der Schraubenfeder bieten. Es kann dabei vorgesehen sein, dass auch zwei umgekehrt orientierte Sacklöcher vorhanden sind zur Unterbringung von zwei bewegbaren Rastmitteln.

Eine weitere von der Erfindung bevorzugte Möglichkeit besteht darin, dass das bewegbare Rastmittel in einer Durchgangsöffnung des Betätigungsschafts angeordnet ist und an beiden Seiten mit jeweils einem feststehenden Rastmittel der Lagerhülse zusammenwirkt. Auch wenn hier von einem bewegbaren Rastmittel die Rede ist, so bildet dieses als ein Bauteil ausgebildete bewegbare Rastmittel eigentlich zwei Rastmittel, da es an seinen beiden Enden mit jeweils einem feststehenden Rastmittel zusammenwirkt.

In Weiterbildung der Erfindung kann vorgesehen sein, dass die Schraubenfeder des bewegbaren Rastmittels an ihrem einen Ende von einer einseitig geschlossene Hülse umgeben ist, deren geschlossene Stirnseite abgerundet oder abgeschrägt ausgebildet ist und damit den mit dem feststehenden Rastmittel zusammenwirkenden Teil des bewegbaren Rastmittels bildet.

Wenn das bewegbare Rastmittel in einer durchgehenden Querbohrungen des Betätigungsschafts angeordnet ist, kann erfindungsgemäß vorgesehen sein, hier eine Schraubenfeder zu verwenden, deren beide Enden jeweils in einer endseitig abgeschlossenen Hülse angeordnet sind.

Anstelle einer die Schraubenfeder umgebenden Hülse kann ebenfalls vorgesehen sein, dass das bewegbare Rastmittel einen insbesondere flachen Schieber mit einem Rastvorsprung aufweist, wobei der Schieber dann von der Schraubenfeder oder einer anderen vorzugsweise metallischen Feder in seiner Wirkrichtung beaufschlagt ist.

Bei dem feststehenden Rastmittel, mit dem das bewegbare Rastmittel zur Bildung der Raststellung zusammenwirkt, kann es sich beispielsweise um eine Stufe handeln, die in dem Weg angeordnet ist, den das bewegbare Rastmittel bei der Bewegung des Betätigungsschafts durchfährt.

Eine solche Stufe kann so ausgebildet sein, dass sie einen Widerstand in der einen Richtung bildet, der aber überwunden werden kann. In der anderen Richtung bietet die Stufe keinen Widerstand, auch wenn sie möglicherweise vom Benutzer taktil bemerkt werden kann.

Es ist aber ebenfalls möglich, dass das feststehende Rastmittel eine in der Bewegungsbahn des bewegbaren Rastmittels liegende Vertiefung aufweist, so dass der Benutzer bei der Bewegung des Betätigungsschafts beziehungsweise Griffs in beiden Richtungen einen Widerstand spürt. Dieser Widerstand kann durchaus unterschiedlich groß sein, was man durch entsprechende Form der Vertiefung erreichen kann.

Insbesondere kann vorgesehen sein, dass das feststehende Rastmittel in der Lagerhülse ausgebildet ist.

Es kann auch vorgesehen sein, das das Rastmittel in beiden Endstellungen rastet, um die Armatur sicher geschlossen oder offen zuhalten. Dies gilt insbesondere bei schweren Griffen.

Weitere Merkmale, Einzelheiten und Vorzüge der Erfindung ergeben sich aus den Ansprüchen der folgenden Beschreibung bevorzugter Ausführungsformen der Erfindung sowie anhand der Zeichnung. Hierbei zeigen:
- Figur 1: eine teilweise geschnittene Seitenansicht einer Ventilkartusche nach der Erfindung;
- Figur 2: die Draufsicht auf die Ventilkartusche;
- Figur 3: einen Querschnitt längs Linie III-III in Figur 1;
- Figur 4: den gleichen Querschnitt wie in Figur 3 in einer Raststellung;
- Figur 5: den Querschnitt bei vollständig geöffnetem Ventil;
- Figur 6: einen der Figur 1 entsprechenden Querschnitt bei einer geänderten Ausführungsform;
- Figur 7: den der Figur 4 entsprechenden Querschnitt der Ausführungsform nach Figur 6;
- Figur 8: den der Figur 5 entsprechenden Querschnitt dieser Ausführungsform;
- Figur 9: einen der Figur 3 entsprechenden Querschnitt bei einer nochmals weiteren Ausführungsform;
- Figur 10: den der Figur 4 entsprechenden Querschnitt bei dieser Ausführungsform;
- Figur 11: den der Figur 5 entsprechenden Querschnitt bei dieser Ausführungsform;
- Figur 12: einen vergrößerten Querschnitt bei einer dritten Ausführungsform;
- Figur 13: einen Querschnitt durch die Ausführungsform in Figur 12 in einer veränderten Position;
- Figur 14: eine Seitenansicht einer nochmals weiteren Ventilkartusche;
- Figur 15: die gleiche Ventilkartusche wie in Figur 14 mit einem Teilschnitt im oberen Bereich;
- Figur 16: einen Längsschnitt durch eine Ventilkartusche bei einer nicht erfindungsgemässen Ausführungsform;
- Figur 17: einen um 90° versetzten Längsschnitt durch die Ventilkartusche der Figur 16.

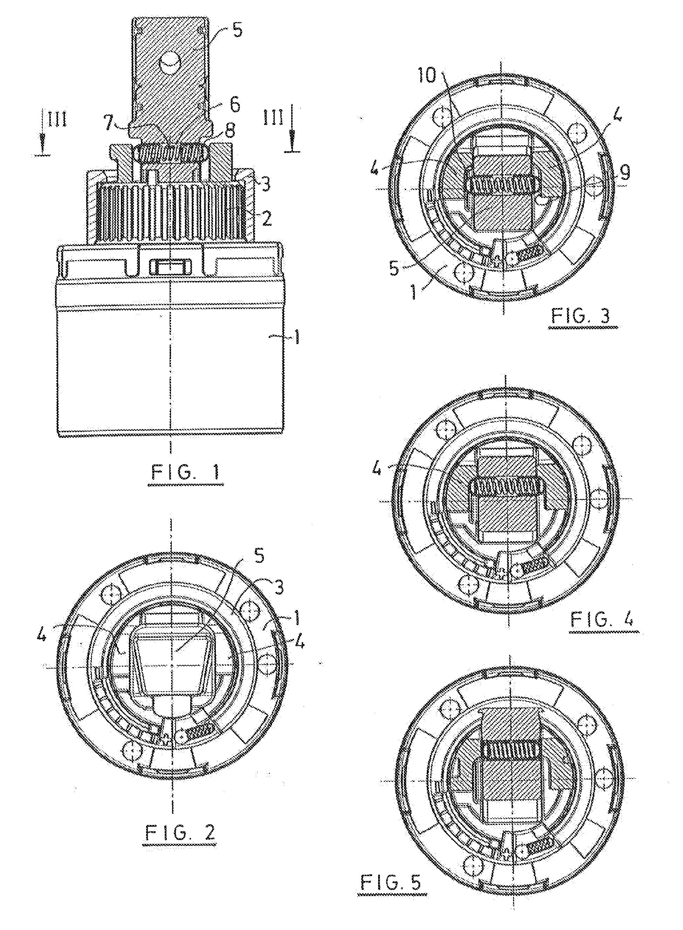

Die Figur 1 zeigt eine Ventilkartusche nach der Erfindung. Die Ventilkartusche enthält ein Ventilgehäuse 1, in dem die wesentlichen Teile untergebracht sind. Aus dem zylindrischen Teil des Ventilgehäuses 1 ragt das Gehäuseoberteil 2 heraus, das mit Längsnuten versehen ist. Auf das Gehäuseoberteil 2 ist eine Anschlaghülse 3 aufgesetzt.

Aus dem Oberteil 2 des Ventilgehäuses 1 ragen Ansätze 4 der Lagerhülse heraus. In der Lagerhülse, die innerhalb des Gehäuses 1 um eine senkrechte Achse verdrehbar ist, ist um eine Achse der Betätigungsschaft 5 schwenkbar gelagert. Dieser Betätigungsschaft 5 ist in Figur 1 im Schnitt dargestellt.

Der Betätigungsschaft 5 wird von einer Querbohrung 6 durchsetzt, in der ein bewegbares Rastmittel angeordnet ist. Das Rastmittel enthält eine Schraubendruckfeder 7, die an beiden Enden in eine endseitig geschlossene Hülse 8 eingreift. Die Schraubendruckfeder 7 drückt beide Hülsen 8 nach außen, also in entgegengesetzte Richtungen. Die Kuppe des Endes jeder Hülse 8 liegt auf der Innenseite der Ansätze 4 der Lagerhülse an.

Aus der Figur 2 kann man entnehmen, dass die erwähnten Ansätze 4 der Lagerhülse zu beiden Seiten des Betätigungsschafts 5 angeordnet sind.

Nun zur Figur 3. Diese zeigt einen Querschnitt durch die Ventilkartusche längs Linie III-III in Figur 1. In den beiden seitlichen Ansätzen 4 der Lagerhülse sind Bahnen 9 eingeformt, die so auf die Lage der Querbohrung 6 anpasst sind, dass die Kuppe der beiden Hülsen 8 in diesen Bahnen wandern, wenn der Betätigungsschaft 5 verschwenkt wird. Einer Verschwenkung des Betätigungsschafts 5 entspricht in den Figuren 3 - 5 eine Bewegung von oben nach unten. Die Figur 3 zeigt die Position des Betätigungsschafts 5, in der das Ventil geschlossen ist. Beide Enden des beweglichen Rastmittels liegen in der Bahn 9 an, und eine Bewegung in Richtung der Öffnung des Ventils erzeugt keinen Widerstand, da die Bahnen für die Enden der Hülse 8 parallel zu der Bewegungsbahn des Betätigungsschafts 5 verlaufen. Man sieht aber in Figur 3, dass an dem in Figur 3 nach oben gerichteten Ende der Bewegungsbahn 9 eine Stufe 10 vorhanden ist, die leicht abgerundet verläuft. Schwenkt man den Betätigungsschaft 5 in Richtung einer zunehmenden Öffnung des Ventils, so gelangt der Betätigungsschaft 5 mit seinem Rastmittel in die Position der Figur 4, wo die beiden Enden der Hülsen 8 an der Stufe 10 anliegen. Der Benutzer merkt einen deutlich steigenden Widerstand. Er weiß jetzt, dass er eine Stelle erreicht hat, an der ein weiteres Öffnen zu einem möglicherweise ungewollten höheren Wasserverbrauch führt. Verschwenkt er nun den Betätigungsschaft 5 weiter in Richtung einer Öffnungsbewegung, so werden die beiden Hülsen 8 wegen der abgerundeten Stufe 10 nach innen geschoben, und der Betätigungsschaft 5 kann weiter verschwenkt werden. In vollständig geöffnetem Zustand ist die Situation der Figur 5 gegeben. Hier ist das bewegbare Rastmittel an den durch die Stufe 10 gebildeten feststehenden Rastmitteln vorbei bewegt.

Aufgrund der Unterbringung des bewegbaren Rastmittels mit der Druckfeder 7 und den beiden Hülsen 8 in einer Bohrung 6 des Betätigungsschafts 5 kann hier ein Bauteil verwendet werden, das ausreichend Platz zu seiner Unterbringung aufweist, andererseits aber die Baugröße des Ventils nicht vergrößert.

Bei der in den Figuren 3 bis Figur 5 dargestellten Lösung bemerkt der Benutzer also bei Erreichen einer bestimmten Öffnungsstellung des Ventils einen Widerstand, den er überwinden muss und kann, um das Ventil weiter zu öffnen. In umgekehrter Richtung merkt er keinen Widerstand.

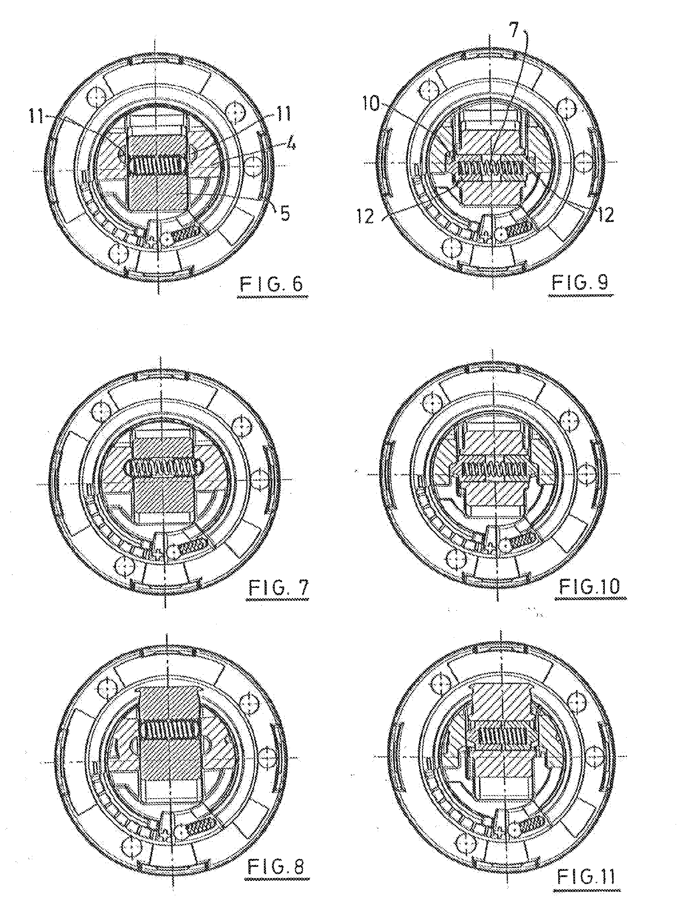

Die Figuren 6 - 7 zeigen eine ähnliche Ausführungsform, bei der das gleiche bewegbare Rastmittel verwendet wird, bei der aber das feststehende Rastmittel unterschiedlich gestaltet ist. In den beiden Ansätzen 4 der Lagerhülse ist jeweils eine Vertiefung 11 eingeformt, die in ihrer Form der Form der Enden der beiden Hülsen 8 entspricht. Diese Vertiefung 11 ist in beiden Ansätzen 4 an der gleichen Stelle angeordnet. Wenn der Benutzer wiederum, ausgehend von der geschlossenen in Figur 6 dargestellten Position des Ventils dieses öffnet, rastet der Betätigungsschaft 5 in der Position ein, in der die beiden Hülsen 8 in die Vertiefungen 11 eingerückt sind. Dies ist in Figur 7 dargestellt. Zum Überwinden dieser Raststellung muss der Benutzer eine zusätzliche Kraft aufbringen, und zwar unabhängig davon, in welche Richtung er den Betätigungsschaft 5 mithilfe des Griffs bewegt. Die Figur 8 zeigt den vollständig geöffneten Zustand des Ventils. Dieser unterscheidet sich, was die Wirkung des Rastmittels angeht, nicht von der Position der Figur 6. Auch beim Schließen des Ventils muss der Benutzer den durch die Vertiefung bewirkten Widerstand überwinden.

Die Ausführungsformen, die bisher beschrieben wurden, haben als gemeinsames Merkmal das bewegbare Rastmittel, das eine Schraubendruckfeder 7 und 2 endseitig geschlossene außen abgerundete Hülsen 8 aufweist. Dieses Rastmittel als eigenes Bauteil ist in der Querbohrung 6 des Betätigungsschafts 5 eingesetzt und zentriert sich dort selbst.

Die Figuren 9 - 11 zeigen eine weitere Lösung, bei der anstelle der vorzugsweise metallischen endseitig geschlossenen Hülsen 8 Schieber 12 verwendet werden, die beispielsweise auch aus Kunststoff bestehen wie der Rest des Ventils. Diese Schieber 12 haben an ihren aus einer Querbohrung 6 des Betätigungsschafts 5 herausragenden Enden jeweils einen abgeschrägten Vorsprung, der in einer entsprechenden Bahn der Ansätze 4 der Lagerhülse geführt ist. Die Wirkung ist ähnlich wie bei der Ausführungsform nach Figur 3 bis Figur 5. Die beiden Schieber 12 werden durch eine zwischen ihnen wirksame Schraubenfeder 7 nach auβen, das heißt voneinander weg, beaufschlagt. Die Schraubenfeder 7 greift in entsprechende Innenräume der beiden Schieber 12 ein.

Natürlich ist es auch denkbar, einen Schieber 12 am einen Ende der Schraubenfeder 7 mit einer Hülse 8 am anderen Ende der Schraubenfeder 7 zu kombinieren.

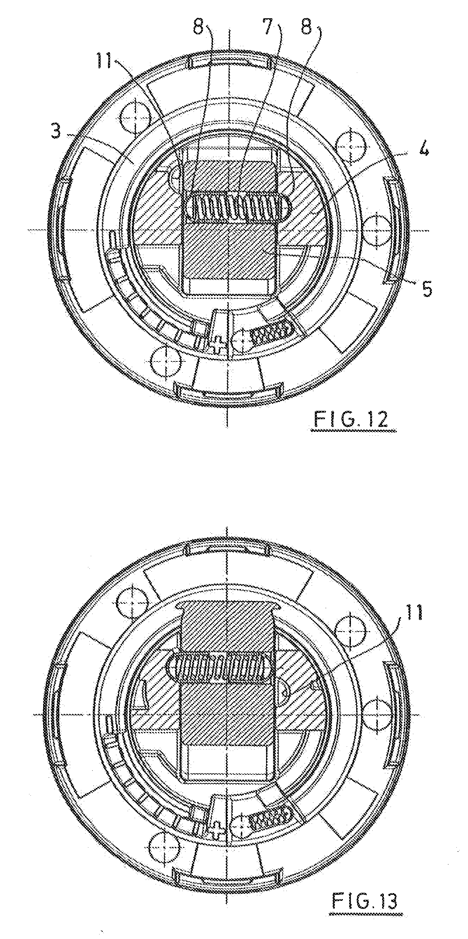

Bei den bisher beschriebenen Ausführungsformen sind die feststehenden Rastmittel in den Ansätzen 4 der Lagerschale symmetrisch zueinander ausgebildet. Die Figur 12 und 13 zeigt nun eine Möglichkeit, dass dies nicht so sein muss. Hier ist in dem einen in Figur 12 und 13 linken Ansatz 4 der Lagerschale eine Vertiefung 11 vorhanden, während an der gleichen Stelle in dem rechten Ansatz 4 der Lagerschale keine solche Vertiefung ist. Dagegen ist in dem rechten Ansatz 4 der Lagerschale eine Vertiefung 11 an einer anderen Stelle angeordnet. Während die Figur 13 das vollständig geöffnete Ventil darstellt, zeigt die Figur 12 den Zustand bei dem teilweise geöffneten Ventil. Es gibt also zwei Raststellungen, nämlich eine Raststellung für das teilweise geöffnete und eine Raststellung für das vollständig geöffnete Ventil. Dies ließe sich auch mit auf beiden Seiten jeweils zwei Vertiefungen 11 erreichen. Die dargestellte und beschriebene Lösung hat aber den Vorteil, dass bei sehr nahe aneinander liegenden Raststellungen man nicht gezwungen ist, im Durchmesser kleinere bewegbare Rastmittel zu verwenden. Man sieht darüber hinaus, dass das Vorsehen eines Rastmittels als getrenntes Bauteil die Möglichkeit eröffnet, dass dieses Rastmittel sich zwischen den beiden Ansätzen 4 der Lagerhülse selbst zentriert. Aber auch bei der Ausführungsform nach Figur 13 sind mehrere Raststellungen möglich.

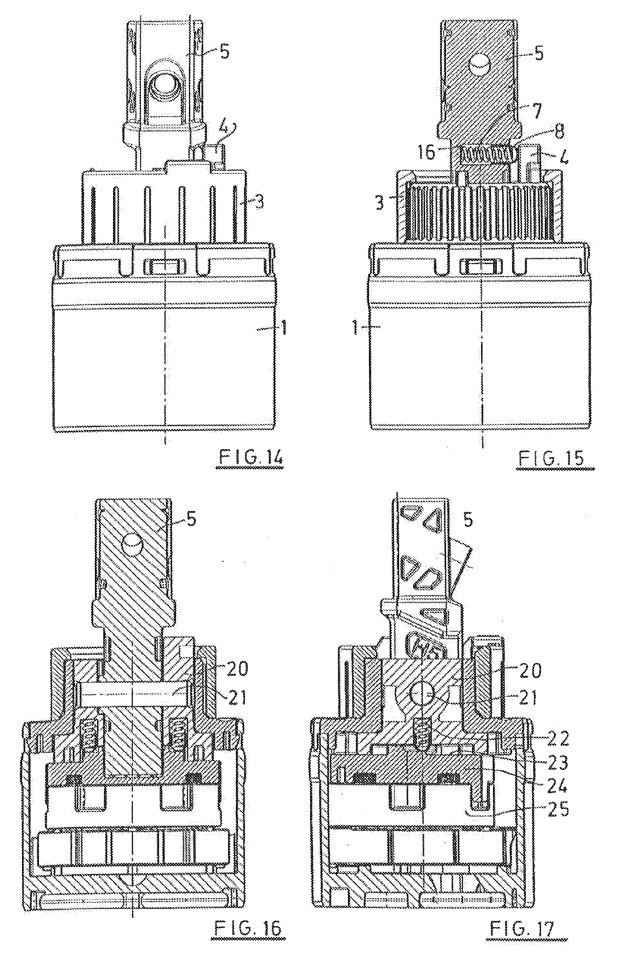

Aus der teilweise geschnittenen Seitenansicht der Figur 1 kann man entnehmen, dass das bewegbare Rastmittel auf beiden Seiten des Betätigungsschafts 5 mit einem dort vorhandenen feststehenden Rastmittel zusammenwirkt. Die Figur 14 zeigt nun eine Seitenansicht einer weiteren Ausführungsform, bei der nur auf einer Seite des Betätigungsschafts 5 ein Ansatz 4 der Lagerhülse vorhanden ist, mit dem ein bewegbares Rastmittel zusammenwirken kann. Die Figur 15 zeigt nun den oberen Teil der Ventilkartusche der Figur 14 im Schnitt. Diese Darstellung entspricht daher der Figur 1. Hier ist in dem Betätigungsschaft 5 eine Sacklochbohrung 16 vorhanden, die über den größten Teil der Dicke des Betätigungsschafts 5 reicht. In dieser Sacklochbohrung 16 ist ein bewegbares Rastmittel mit einer Feder 7 und einer Hülse 8 untergebracht. Man kann auch sagen, dass hier ein Rastmittel verwendet wird, das einem halben Rastmittel nach der vorherigen Ausführungsform entspricht. Das feststehende Rastmittel kann nun wieder die Formen aufweisen, die sich aus den Figuren 6 bis 8, 12 und 13 ergeben.

Man kann den verschiedenen Schnitten entnehmen, dass die Quererstreckung der Ansätze 4 der Lagerschale kleiner ist als die Quererstreckung des Betätigungsschafts 5. Daher steht in dem Betätigungsschaft 5 mehr Platz für das bewegbare Rastmittel zur Verfügung. Das bewegbare Rastmittel braucht grundsätzlich mehr Platz als das feststehende Rastmittel, das ja nur aus einer Vertiefung oder einer Stufe besteht. Hinzu kommt noch, dass das beidseits wirkende bewegbare Rastmittel von einer gemeinsamen Schraubenfeder 7 beaufschlagt wird.

Die Platzverhältnisse bleiben durch die Anordnung der von der Erfindung vorgeschlagenen Rastung die gleichen, aber der Platz für das bewegbare Rastmittel wird optimal ausgenutzt und es wird auf diese Weise möglich, zur Beaufschlagung ein Federelement zu verwenden, das seine gleich bleibend gute Federcharakteristiken beibehält.

Eine weitere abgeänderte Ausführungsform ist in den Figuren 16 und 17 dargestellt. Hier ist zum ersten Mal im Schnitt die Lagerhülse 20 selbst zu sehen. Die Lagerhülse 20 weist eine beidseits gelagerte Welle 21 auf, um die der Betätigungsschaft 5 schwenkbar gelagert ist. Beidseits des unteren Abschnitts des Betätigungsschafts 5 enthält die Lagerhülse 20 jeweils eine Sacklochbohrung 22, die nach unten offen ist. Die Achse in dieser Sacklochbohrung 22 verläuft senkrecht zur Achse der Welle 21. In jeder dieser beiden Sacklochbohrungen 22 ist ein bewegbares Rastelement eingesetzt, das in etwa dem Rastelement der Figur 15 entspricht. Als feststehendes Rastelement dient eine Bewegungsbahn 23 auf der Oberseite der Halterung 24 für die bewegbare Steuerscheibe 25. Diese Bahn weist im dargestellten Beispiel zwei Stufen auf, an denen der Bewegungswiderstand für den Benutzer ansteigt, wenn er das Ventil öffnet. Bei der Öffnung des Ventils wird die Halterung 24 für die bewegbare Steuerscheibe 25 verschoben, während die Lagerschale 20 stehen bleibt. Selbstverständlich kann die Bewegungsbahn, längs der das bewegbare Rastmittel vorbei bewegt wird, auch so ausgebildet sein, wie dies bei den vorherigen Ausführungsformen gezeigt wurde, nämlich Stufen, Vertiefungen, oder dergleichen aufweisen, die auch auf beiden Seiten des Betätigungsschafts 5 an unterschiedlichen Stellen angeordnet sein können.

## Patentansprüche

1. Ventilkartusche für eine Sanitärarmatur, mit
1.1 einem Ventilgehäuse (1),
1.2 einer in dem Ventilgehäuse (1) verdrehbar angeordneten Lagerhülse (20),
1.3 in der ein Betätigungsschaft (5) um eine in der Lagerhülse (20) gelagerte Achse schwenkbar gelagert ist, sowie mit
1.4 einer mindestens einseitig wirksamen Rastung zur Bildung einer Rastposition für die Bewegung des Betätigungsschaft (5), die 1.5 ein nachgiebiges und vorgespanntes Rastmittel aufweist, das
1.6 als getrenntes Bauteil ausgebildet und in einer Öffnung des Betätigungsschafts (5) der Ventilkartusche austauschbar beziehungsweise einsetzbar und
1.7 in einer Richtung parallel zu der Schwenkachse des Betätigungsschafts (5) nachgiebig gehaltert ist,
**dadurch gekennzeichnet, dass**
1.8 das bewegbare Rastmittel in einem Sackloch (16) des Betätigungsschafts (5) angeordnet ist und sich auf dem Boden des Sacklochs (16) abstützt oder
1.9 das bewegbare Rastmittel in einer Durchgangsöffnung (6) des Betätigungsschafts (5) angeordnet ist und an beiden Seiten mit einem feststehenden Rastmittel der Lagerhülse (20) zusammenwirkt.

2. Ventilkartusche nach Anspruch 1, bei der das nachgiebige Rastmittel mit einem feststehenden Rastmittel zusammenwirkt.

3. Ventilkartusche nach Anspruch 1 oder 2, bei der das bewegbare Rastmittel ein metallisches Federelement, insbesondere eine Schraubenfeder (7), aufweist.

4. Ventilkartusche nach einem der vorhergehenden Ansprüche, bei der das feststehende Rastmittel in der Lagerhülse (20) angeordnet und/oder ausgebildet ist.

5. Ventilkartusche nach einem der Ansprüche 3 - 4, bei der die Schraubenfeder (7) mindestens an ihrem einen Ende von einer endseitig geschlossenen Hülse (8) umgeben ist, deren Stirnseite abgerundet und/oder schräg ausgebildet ist.

6. Ventilkartusche nach einem der Ansprüche 3 - 5, bei der die Schraubenfeder (7) mindestens einseitig auf einen Rastschieber (12) einwirkt.

7. Ventilkartusche nach einem der Ansprüche 2 - 6, bei der das feststehende Rastmittel mindestens eine Stufe (10) in der Bewegungsbahn des bewegbaren Rastmittel aufweist.

8. Ventilkartusche nach einem der Ansprüche 2 - 7, bei der das feststehende Rastmittel eine in der Bewegungsbahn des bewegbaren Rastmittels liegende Vertiefung (11) aufweist.

## Claims

1. Valve cartridge for a sanitary fitting, having
1.1 a valve housing (1),
1.2 a bearing sleeve (20) arranged rotatably inside the valve housing (1),
1.3 in which an actuating stem (5) is swivellably mounted about an axis mounted inside the bearing sleeve (20) and with
1.4 a catch effective on at least one side for forming a catch position for the movement of the actuating stem (5), which
1.5 has a yielding and pretensioned catch means which
1.6 is designed as a separate component and can be replaced or inserted in an opening of the actuating stem (5) and
1.7 is yieldingly held in a direction parallel to the swivel axis of the actuating stem (5),
**characterized in that**
1.8 the movable catch means is arranged inside a blind hole (16) of the actuating stem (5) and rests on the bottom of said blind hole (16) or
1.9 the movable catch means is arranged inside a through-opening (6) of the actuating stem (5) and interacts on both sides with a fixed catch means of the bearing sleeve (20).

2. Valve cartridge according to Claim 1, where the yielding catch means interacts with a fixed catch means.

3. Valve cartridge according to Claim 1 or 2, where the movable catch means has a metallic spring element, in particular a helical spring (7).

4. Valve cartridge according to one of the preceding claims, where the fixed catch means is arranged and/or designed in the bearing sleeve (20).

5. Valve cartridge according to one of Claims 3 to 4, where the helical spring (7) is surrounded at least at its one end by a sleeve (8) closed on one side and whose closed side is designed rounded and/or angled.

6. Valve cartridge according to one of Claims 3 to 5, where the helical spring (7) acts at least on one side on a slide (12).

7. Valve cartridge according to one of Claims 2 to 6, where the fixed catch means has at least one step (10) in the movement path of the movable catch means.

8. Valve cartridge according to one of Claims 2 to 7, where the fixed catch means has a recess (11) located in the movement path of the movable catch means.

## Revendications

1. Cartouche de soupape pour une robinetterie sanitaire, comprenant
1.1 une cage de soupape (1),
1.2 une douille de palier (20) disposée de manière rotative dans la cage de soupape (1) et
1.3 dans laquelle est logée une tige d'actionnement (5) pouvant pivoter autour d'une axe logée dans la douille de palier (20), ainsi
1.4 qu'un crantage agissant au moins d'un côté afin de former une position de crantage pour le mouvement de la tige d'actionnement (5), lequel crantage
1.5 présente un moyen de crantage flexible et taré, qui
1.6 est conçu en tant que composant distinct et peut être remplacé et inséré dans une ouverture de la tige d'actionnement (5) de la cartouche de soupape et
1.7 est maintenu en souplesse dans une direction parallèle à l'axe de pivotement de la tige d'actionnement (5),
**caractérisée en ce que**
1.8 le moyen de crantage mobile est placé dans un trou borgne (16) de la tige d'actionnement (5) et s'appuie sur le fond du trou borgne (16), ou que
1.9 le moyen de crantage mobile est placé dans une ouverture (6) de la tige d'actionnement (5) et agit conjointement des deux côtés avec un moyen de crantage fixe de la douille de palier (20).

2. Cartouche de soupape selon la revendication 1, dans laquelle le moyen de crantage flexible agit conjointement avec un moyen de crantage fixe.

3. Cartouche de soupape selon la revendication 1 ou 2, dans laquelle le moyen de crantage mobile présente un élément élastique métallique, en particulier un ressort cylindrique (7).

4. Cartouche de soupape selon l'une des revendications précédentes, dans laquelle le moyen de crantage fixe est disposé et/ou formé dans la douille de palier (20).

5. Cartouche de soupape selon l'une des revendications 3 ou 4, dans laquelle le ressort cylindrique (7) est entouré au moins à l'une de ses extrémités par une douille (8) au bout fermée, dont la face frontale est arrondie et/ou biseautée.

6. Cartouche de soupape selon l'une des revendications 3 à 5, dans laquelle le ressort cylindrique (7) agit au moins d'un côté sur un coulisseau à crans (12).

7. Cartouche de soupape selon l'une des revendications 2 à 6, dans laquelle le moyen de crantage fixe présente au moins un palier (10) dans la voie de déplacement du moyen de crantage mobile.

8. Cartouche de soupape selon l'une des revendications 2 à 7, dans laquelle le moyen de crantage fixe présente une encoche (11) située dans la voie de déplacement du moyen de crantage mobile.
